# EUROPÄISCHE PATENTANMELDUNG

(11) **EP 4 556 340 A1**
(43) Veröffentlichungstag der Anmeldung: **21.05.2025**
(21) Anmeldenummer: 23210661.7
(22) Anmeldetag: 17.11.2023
(51) Int. Cl.: B60W 60/00, G06N 3/04

(54) **VERFAHREN UND VORRICHTUNG ZUR ERKENNUNG VON DATENPUNKTEN MIT HOHER UNSICHERHEIT BEI EINEM MASCHINENLERNMODELL FÜR EIN AUTONOMES FAHRSYSTEM**

(71) Anmelder: Volkswagen Aktiengesellschaft, 38436 Wolfsburg (DE)
(72) Erfinder: Spiegelberg, Jakob, 38122 Braunschweig (DE); Kempkes, Marie, 38259 Salzgitter (DE)

(57) **Zusammenfassung**

Die vorliegende Erfindung betrifft ein Verfahren zur Erkennung von Datenpunkten mit hoher Unsicherheit bei einem Maschinenlernmodell (ML) für ein autonomes Fahrsystem (F). Hierbei wird in einer Offline-Phase ein künstliches neuronales Netzwerk bereitgestellt (11), bei dem durch die Ausgabeschicht für die Ausgabedaten jeweils ein Unsicherheitsbereich bestimmt wird. Das modifizierte neuronale Netzwerk wird mit einem Trainingsdatensatz trainiert (12). Es werden Unsicherheitsmaße für die Datenpunkte des Trainingsdatensatzes und basierend darauf Unsicherheitsschwellwerte ermittelt (13). In einer Online-Phase wird ein neuer Datenpunkt erfasst (14) und das Unsicherheitsmaß für den neu erfassten Datenpunkt ermittelt (15). Daraufhin wird überprüft (16), ob das ermittelte Unsicherheitsmaß für den neu erfassten Datenpunkt den in der Offline-Phase ermittelten Unsicherheitsschwellwert überschreitet. Hierbei kann in der Offline-Phase das künstliche neuronale Netzwerk mit einem Trainingsdatensatz auf eine Aufgabe vortrainiert (10) werden, das vortrainierte künstliche neuronalen Netzwerk modifiziert (11) werden, indem die Ausgabeschicht des künstlichen neuronalen Netzwerks durch eine Ausgabeschicht ersetzt wird, bei der für die Ausgabedaten jeweils ein Unsicherheitsbereich bestimmt wird; und das modifizierte künstliche neuronale Netzwerk mit dem Trainingsdatensatz, der bereits für das ursprüngliche Training vor der Modifizierung des künstlichen neuronalen Netzwerks verwendet worden ist, nachtrainiert (12) werden.

## Beschreibung

Die vorliegende Erfindung betrifft ein Verfahren und eine Vorrichtung zur Erkennung von Datenpunkten mit hoher Unsicherheit bei einem Maschinenlernmodell für ein autonomes Fahrsystem, welches beispielsweise bei autonom fahrenden Fahrzeugen darauf basierende Reaktionen und Entscheidungen ermöglicht.

Beim Maschinellen Lernen (ML) wird mittels geeigneter selbstadaptiver Algorithmen und basierend auf Trainingsdaten ein statistisches Modell aufgebaut, mit dem Muster und Gesetzmäßigkeiten erkannt werden können und Vorhersagen für zukünftige Daten oder Entscheidungen basierend auf erfassten Daten getroffen werden können. Aufgrund der Komplexität sind Maschinenlern-Modelle üblicherweise als künstliche neuronale Netzwerke, beispielsweise im Bereich der Objektdetektion als sogenannte "Deep Neural Networks" ausgestaltet, und werden aus diesem Grund häufig auch als Systeme mit künstlicher Intelligenz (KI) bezeichnet. Solche tiefen neuronalen Netze können eine Vielzahl von Zwischenschichten (englisch hidden layers) zwischen Eingabeschicht und Ausgabeschicht und dadurch eine umfangreiche Komplexität mit einer sehr großen Zahl von Parametern und Rechenoperationen aufweisen und benötigen in der Lernphase eine große Menge an Trainingsdaten.

Ein Anwendungsgebiet des Maschinellen Lernens, dem immer mehr Bedeutung zukommt, ist der Einsatz in Fahrzeugen, beispielsweise für Fahrerassistenzsysteme beim teilautomatisierten Fahren oder für Sicherheitssysteme beim vollautomatisierten Fahren. So kann mit Fahrzeugsensoren das Umfeld des Fahrzeugs erfasst werden und basierend auf den erfassten Sensordaten mit einem geeigneten Maschinenlern-Modell ein Umfeldmodell erstellt werden. Hierfür können Wahrnehmungsmodule vorgesehen sein, welche erlernte Objekte im Umfeld erkennen können und Informationen hierüber an ein Planungsmodul weiterleiten. Auf diese Weise kann beispielsweise die Detektion und Klassifizierung diverser Objekte in mit Fahrzeugkameras erfassten Kamerabildern, wie beispielsweise von Fahrzeugen und Fußgängern, mit lernbasierten Verfahren realisiert werden. Das Planungsmodul kann dann für eine Trajektorienplanung und sichere Steuerung des Fahrzeugs die erkannten Objekte berücksichtigen. Sowohl das Wahrnehmungsmodule als auch das Planungsmodul können hierbei auf einem Maschinenlern-Modell basieren.

Von hoher Relevanz für die Anwendung von solchen Systemen für Fahrerassistenzsysteme und autonom fahrende Fahrzeuge, aber auch für Anwendungen des maschinellen Lernens in anderen sicherheitskritischen Bereichen, ist die Verlässlichkeit von Prädiktionen der verwendeten Modelle, die maßgeblich durch die Qualität der Trainingsdaten beeinflusst wird. Wird ein Maschinenlern-Modell nach der Trainingsphase auf Daten angewandt, die es noch nie vorher gesehen hat und die sich stark von denen aus dem Training unterscheiden, ist eine Vorhersage in den meisten Fällen schlecht, auch wenn es im Training eine gute Performanz aufgewiesen hat. Ein Problem beim Anwenden solcher trainierten Modelle in der Inferenz ist, dass im Allgemeinen nicht bestimmt werden kann, wie ähnlich der neu gesehene Datenpunkt den Trainingsdaten ist, wobei unter einem Datenpunkt hierbei allgemein eine Einheit von Informationen verstanden wird, beispielsweise die mit einem Sensor zu einem Zeitpunkt erfassten Sensordaten. Es gibt daher keinerlei Hinweis darauf, wie sicher bzw. unsicher eine Vorhersage ist.

Eine Schätzung von prädiktiven Unsicherheiten ist mit Ensembling-Methoden oder Bayes'sche Netzwerke (engl.: Bayesian Neural Network) möglich. Sowohl für Ensembling-Methoden als auch für Bayes'sche Netzwerke ist eine hohe Rechenleistung in der Inferenz notwendig, da bei ersteren die Vorhersage mehrerer gleichartiger neuronaler Netzwerke benötigt wird und bei letzteren von einer Verteilung gesampelt werden muss. Daher sind beide Methoden nicht geeignet für Online-Anwendungen, bei denen direktes Feedback verlangt wird.

So sind bei Online-Anwendungen wie der Verarbeitung von Straßenszenen beim autonomen Fahren die verfügbaren Latenz-Zeiten sehr gering, es ist aber wichtig, dass das autonom fahrende System direkte Rückmeldung über die Verlässlichkeit der jeweiligen Vorhersage bekommt. Wird ein corner case detektiert, also eine Situation, die nie im Training gesehen wurde, kann dann eine konservative Entscheidung getroffen werden. Dies könnte bedeuten, dass der Fahrer die Steuerung übernimmt.

Es ist eine Aufgabe der Erfindung, ein Verfahren zur Erkennung von Datenpunkten mit hoher Unsicherheit bei einem Maschinenlernmodell für ein autonomes Fahrsystem zur Verfügung zu stellen, sowie eine entsprechende Vorrichtung bereitzustellen

Diese Aufgabe wird durch die unabhängigen Ansprüche gelöst. Bevorzugte Ausgestaltungen der Erfindung sind Gegenstand der abhängigen Ansprüche.

Das erfindungsgemäße Verfahren zur Erkennung von Datenpunkten mit hoher Unsicherheit bei einem Maschinenlernmodell für ein autonomes Fahrsystem umfasst in einer Offline-Phase die folgenden Schritte:
- Bereitstellen eines künstlichen neuronalen Netzwerks, bei dem durch die Ausgabeschicht für die Ausgabedaten jeweils ein Unsicherheitsbereich bestimmt wird;
- Trainieren des künstlichen neuronalen Netzwerks mit einem Trainingsdatensatz;
- Ermitteln von Unsicherheitsmaßen für die Datenpunkte des Trainingsdatensatzes und von Unsicherheitsschwellwerten basierend auf den ermittelten Unsicherheitsmaßen;
und in einer Online-Phase die folgenden Schritte:
- Erfassen eines neuen Datenpunkts;
- Ermitteln des Unsicherheitsmaßes für den neu erfassten Datenpunkt;
- Überprüfen, ob das ermittelte Unsicherheitsmaß für den neu erfassten Datenpunkt den in der Offline-Phase ermittelten Unsicherheitsschwellwert überschreitet.

Auf diese Weise kann auch bei der begrenzt im Fahrzeug vorliegenden Rechenleistung und trotz der hohen Latenzanforderungen autonom fahrender Fahrzeuge online eine Schätzung von Unsicherheiten vorgenommen werden.

Hierbei kann in der Offline-Phase
- das künstliche neuronale Netzwerk mit einem Trainingsdatensatz auf eine Aufgabe vortrainiert werden;
- das vortrainierte künstliche neuronalen Netzwerk modifiziert werden, indem die Ausgabeschicht des künstlichen neuronalen Netzwerks durch eine Ausgabeschicht ersetzt wird, bei der für die Ausgabedaten jeweils ein Unsicherheitsbereich bestimmt wird; und
- das modifizierte künstliche neuronale Netzwerk mit dem Trainingsdatensatz, der bereits für das ursprüngliche Training vor der Modifizierung des künstlichen neuronalen Netzwerks verwendet worden ist, nachtrainiert werden.

Vorteilhafterweise umfassen hierbei die ermittelten Unsicherheitsmaße sowohl ein Unsicherheitsmaß für die aleatorische Unsicherheit als auch ein Unsicherheitsmaß für die epistemische Unsicherheit der Datenpunkte. Die getrennte Ermittlung von aleatorischer und epistemischer Unsicherheit ermöglicht hierbei, je nach Typ der Unsicherheit adaptiv zu reagieren. Ferner kann so das Volumen zu speichernder Daten reduziert werden, da Daten mit aleatorischer Unsicherheit und geringer epistemischer Unsicherheit gegebenenfalls rausgefiltert werden können.

Besonders vorteilhaft kann das erfindungsgemäße Verfahren eingesetzt werden, wenn sowohl ein Unsicherheitsschwellwert für die aleatorische Unsicherheit als auch ein Unsicherheitsschwellwert für die epistemische Unsicherheit der Datenpunkte ermittelt wird.

Dabei wird vorteilhafterweise für den Fall, dass die Überprüfung ergibt, dass das ermittelte Unsicherheitsmaß den Unsicherheitsschwellwert überschreitet, eine Warnung an das autonome Fahrsystem ausgegeben.

Ebenso wird vorteilhafterweise für den Fall, dass die Überprüfung ergibt, dass das bestimmte Unsicherheitsmaß den Unsicherheitsschwellwert überschreitet, eine Funktion des autonomen Fahrsystems angepasst wird.

Weiterhin wird dabei vorzugsweise für den Fall, dass die Überprüfung ergibt, dass das bestimmte Unsicherheitsmaß den Unsicherheitsschwellwert überschreitet, der neu erfasste Datenpunkt für ein weiteres Training des autonomen Fahrsystems gespeichert.

Gemäß einer Ausführungsform der Erfindung nimmt das Maschinenlernmodell eine Klassifikation für eine semantische Segmentierung und/oder Objekterkennung vor, welche für ein Assistenzsystem des autonomen Fahrsystems verwendet wird.

Insbesondere nimmt das Maschinenlernmodell hierbei eine Klassifikation in n verschiedene Klassen vor, wobei bei dem ursprünglichen Trainieren des künstlichen neuronalen Netzwerks in der Ausgabeschicht eine Softmax-Aktivierungsfunktion angewendet wird, mit der eine n-dimensionale Ausgabe von normierten Wahrscheinlichkeitswerten für die Datenpunkte generiert wird.

Gemäß einer Ausführungsform der Erfindung wird hierbei die n-dimensionale Ausgabe von Wahrscheinlichkeitswerten mit Softmax-Aktivierung durch eine 2^n-dimensionale Ausgabe von Werten für Wahrscheinlichkeitsmassen für alle Kombinationen möglicher Klassen mit Softmax-Aktivierung ersetzt und das so modifizierte künstliche neuronale Netzwerk nachtrainiert.

Vorteilhafterweise werden hierbei die Unsicherheitsmaße ermittelt, indem für jeden Datenpunkt aus den 2^n Werten für die Wahrscheinlichkeitsmassen 2^n Plausibilitätswerte und 2^n Glaubenswerte berechnet werden.

Vorzugsweise wird dabei ein Maß für die epistemische Unsicherheit aus der Differenz der Plausibilitätswerte und Glaubenswerte berechnet.

Ebenso wird vorzugsweise ein Maß für die aleatorische Unsicherheit mittels der Entropie der Plausibilitätswerte berechnet.

Gemäß einer weiteren Ausführungsform der Erfindung wird die n-dimensionale Ausgabe von Wahrscheinlichkeitswerten mit Softmax-Aktivierung durch eine n-dimensionale Ausgabe von Wahrscheinlichkeitswerten mit Sigmoid -Aktivierung ersetzt und das so modifizierte künstliche neuronale Netzwerk nachtrainiert wird.

In diesem Fall umfassen die Unsicherheitsmaße sowohl die aleatorische als auch epistemische Unsicherheit und werden vorzugsweise mittels einer Summation der Plausibilitätswerte ermittelt.

Ferner umfasst die Erfindung eine Vorrichtung, die eingerichtet ist, ein erfindungsgemäßes Verfahren auszuführen sowie ein Computerprogramm mit Instruktionen, die bei Ausführung durch einen Computer den Computer zur Ausführung der Schritte des erfindungsgemäßen Verfahrens veranlassen.

Schließlich umfasst die Erfindung auch ein Fahrzeug, das eingerichtet ist, ein erfindungsgemäßes Verfahren auszuführen oder eine erfindungsgemäße Vorrichtung aufweist.

Weitere Merkmale der vorliegenden Erfindung werden aus der nachfolgenden Beschreibung und den Ansprüchen in Verbindung mit den Figuren ersichtlich.
- Fig. 1: zeigt schematisch ein Ablaufdiagramm für ein erfindungsgemäßes Verfahren;
- Fig. 2: zeigt schematisch ein künstliches neuronales Netzwerk mit einer 2^n-dimensionalen Ausgabe von Werten für Wahrscheinlichkeitsmassen mit Softmax-Aktivierung; und
- Fig. 3: zeigt eine schematische Übersicht zur Erkennung von Datenpunkten mit hoher Unsicherheit, sowie die darauf basierende Warnung bzw. Anpassung eines autonomen Fahrsystems und Abspeicherung der Datenpunkte.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung, wie er in den Ansprüchen definiert ist, zu verlassen.

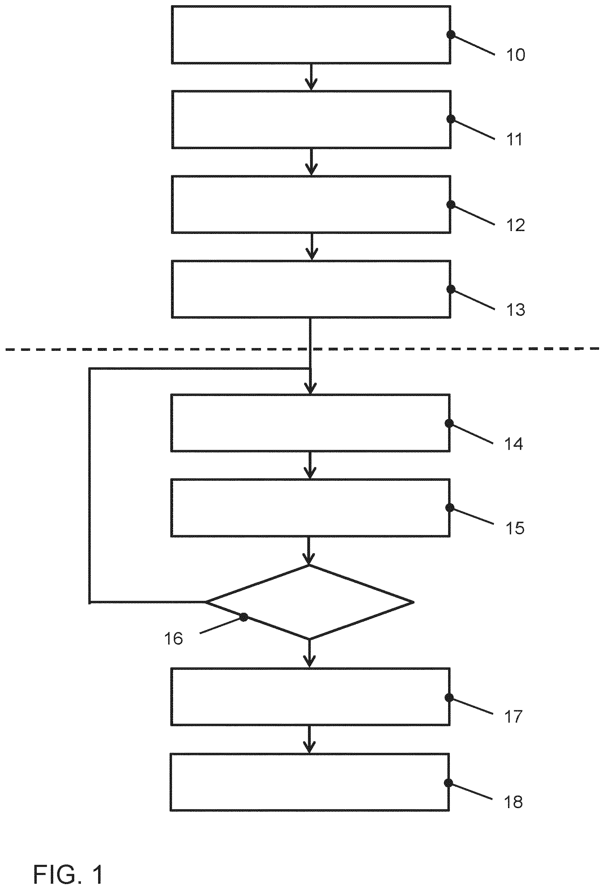

Ein Ablaufdiagramm eines erfindungsgemäßen Verfahrens wird in Figur 1 gezeigt. Das Verfahren umfasst hierbei sowohl eine Offline-Phase als auch eine Online-Phase und wir am Beispiel eines autonomen Fahrsystems erläutert. Ein solches autonomes Fahrsystem weist üblicherweise Sensoren, Aktoren und Assistenzsysteme auf, wobei eine Steuerungseinheit Fahrentscheidungen unter der Verwendung künstlicher Intelligenz trifft. Die Erfindung ist aber nicht auf Anwendungen im Rahmen eines autonomen Fahrsystems beschränkt.

In der folgenden Beschreibung des erfindungsgemäßen Verfahrens wird ferner davon ausgegangen, dass ein vortrainiertes Modell vorhanden ist, das dann modifiziert und nachtrainiert wird. Das erfindungsgemäße Verfahren kann aber ebenso angewendet werden, wenn kein vortrainiertes Modell vorhanden ist und ein Modell mit von Beginn an passender 2"n-dimensionaler Ausgabeschicht des neuronalen Netzwerks trainiert wird.

In einem Verfahrensschritt 10 wird ein künstliches neuronales Netzwerk des Maschinenlernmodells zunächst in einer Offline-Phase mit einem Trainingsdatensatz trainiert. Dieses Training erfolgt typischerweise auf einem Server, welcher ausreichende Ressourcen aufweist, um großen Datenmengen von einem akkumulierten Offline-Datensatz beim Training zu verarbeiten. So kann dieser Offline-Datensatz beispielsweise eine Vielzahl von Beispielbildern enthalten. Das neuronale Netzwerk kann dann beispielsweise trainiert werden, um zu lernen, verschiedene visuelle Elemente wie Objekte, Personen und Szenen zu erkennen und zu klassifizieren. Je nach Maschinenlernmodell und den für dieses Maschinenlernmodell erforderlichen Ressourcen ist es aber auch möglich, die Verfahrensschritte der Offline-Phase in einem Fahrzeug durchzuführen.

Es werden im folgenden Lernprobleme betrachtet, bei denen den Inputdaten n verschiedene Label oder "Klassen" zugeordnet werden sollen, wobei nur eines dieser n Label für den jeweiligen Input korrekt ist. Derartige Probleme sind im autonomen Fahren allgegenwärtig, z.B. in einer Objekterkennung oder einer semantischen Segmentierung. Entsprechend wird in der Ausgabeschicht des neuronalen Netzwerks zunächst eine Softmax-Funktion auf die n-dimensionalen Ausgabewerte anwendet, sodass die Ausgabewerte auf Eins normiert ist.

In Verfahrensschritt 11 wird dann das neuronalen Netzwerks modifiziert, um die Voraussetzung dafür zu schaffen, dass Datenpunkte mit hoher Unsicherheit online identifiziert werden können und dabei zwischen aleatorischer und epistemischer Unsicherheit unterschieden werden kann. Die aleatorische Unsicherheit ist hierbei intrinsisch zu den Daten und kann nicht reduziert werden, die epistemische Unsicherheit umfasst dagegen Modellierungsfehler und reduzierbare Unsicherheiten unvorhergesehener Daten.

Auch wenn ein autonomes System bei zu unsicheren Vorhersagen in jedem Falle vorsichtig reagieren sollte, ist es im Kontext des autonomen Fahrens besonders wichtig, diese Unsicherheitstypen unterscheiden zu können, um ein angepasstes Verhalten je nach Unsicherheitstyp zu ermöglichen. So muss bei aleatorischer Unsicherheit eine Änderung der Situation eintreten, wie beispielsweise ein besseres Erkennen eines entgegenkommenden Fahrzeugs oder Straßenschildes beim Näherkommen, was gegebenenfalls durch Warten oder Fortführung der momentanen Situation erfolgen kann. Bei epistemischer Unsicherheit muss dagegen restriktiver bzw. vorsichtiger reagiert werden, da sich diese Unsicherheit nicht auflösen wird. Ebenso sind Datenpunkte mit hoher epistemischer Unsicherheit relevant, um später bessere Modelle damit trainieren zu können.

Die Modifizierung des neuronalen Netzwerks erfolgt, indem die bestehende Ausgabeschicht durch eine abgewandelte Ausgabeschicht ersetzt wird, die eine Abschätzung der Unsicherheit einzelner Datenpunkte mit nur einem Forward-Pass durch das neuronale Netzwerk ermöglicht. Dieses ermöglicht, dass eine Ermittlung und Quantifizierung der aleatorischen und epistemischen Unsicherheit auch bei Bestandsarchitekturen leicht möglich ist.

Für die Abschätzung der Unsicherheit und die Schwellwertbestimmung für die Unsicherheit kommen zwei verschiedene Ausführungsformen in Betracht, die im Folgenden erläutert werden.

In der ersten Ausführungsform wird die ursprüngliche n-dimensionale Ausgabe mit Softmax-Aktivierung durch eine 2^n-dimensionalen Ausgabe ersetzt, wobei für die Ausgabedaten jeweils ein Unsicherheitsbereich bestimmt wird. Hierbei erfolgt eine Unsicherheitsschätzung in Anlehnung an die Dempster-Shafer Theorie (DST), welche auch als mathematische Theorie der Evidenz bezeichnet wird, es sind aber ebenso auch andere Umsetzungsformen denkbar.

Gemäß der Dempster-Shafer Theorie werden die 2^n Ausgabewerte als Massen interpretiert. Die Dempster-Shafer Theorie kann als Verallgemeinerung der klassischen Wahrscheinlichkeitstheorie gedeutet werden und verwendet nicht unmittelbar Wahrscheinlichkeiten, sondern beschreibt Wahrscheinlichkeitsvolumen, welche die klassische Bayes'sche Wahrscheinlichkeit umschließt. Die Größe des jeweiligen Wahrscheinlichkeitsvolumen spiegelt dabei die Unsicherheit der Wahrscheinlichkeit wider, beschrieben durch Ober- und Untergrenzen aller möglicher Klassen (im Fall einer Klassifikation). Damit kann die Dempster-Shafer Theorie zur Verarbeitung von unsicherem Wissen und darauf beruhenden Entscheidungsfindungen genutzt werden.

Grundlegend für die Dempster-Shafer Theorie sind hierbei drei Funktionen, die sogenannte Massefunktion (engl.: mass function (m)), die Glaubensfunktion (engl.: belief function (bel)) und die Plausibilitätsfunktion (engl.: plausibility function (pl)). Die sich aus der Plausibilitätsfunktion ergebende Plausibilität (plausibility) wird dabei als Möglichkeit für das Vorliegen einer Klasse aufgefasst. Kann beispielsweise ein Label A ausgeschlossen werden, hat es eine geringe Plausibilität, muss Label A auch berücksichtigen werden, so hat es eine hohe Plausibilität.)"). Der sich aus der Glaubensfunktion ergebende Glaube (Belief), den man in eine Aussage hat, ist das Gegenstück hierzu, also ein Maß dafür, wie sehr darauf vertraut werden kann, dass ein bestimmtes Label vorliegt.

Beide Angaben werden aus der Masse gebildet, die gewisse Ähnlichkeit mit einer Wahrscheinlichkeit hat, aber auf dem sogenannten Frame of Discernment definiert ist. Unter dem Frame of Discernment wird hierbei eine Menge sich gegenseitig ausschließender Elemente oder in anderen Worten der Raum der möglichen Annahmen, über die sich die Masse verteilt, verstanden. Für den Fall einer Klassifikation in n Klassen ist es das 2**n dimensionale sogenannte Powerset aus allen Kombinationen möglicher Label, wobei jedes Set jeweils die Interpretation hat, dass es jedes der enthaltenen Label sein kann bzw. keine Unterscheidung möglich ist. Für das Beispiel n=3 und die Label A, B und C ergibt sich beispielsweise: {{A}, {B}, {C}, [A,B}, {A,C}, {B,C}, {A,B,C}, leeres Set}. Um aus der Masse Glaube (Belief) und Plausibilität (plausibility) zu erhalten, werden für den Fall einer Klassifikation für die Plausibilität (plausibility) alle Massewerte, welche die Label im jeweiligen Set enthalten, zusammengezogen. Für n=3 und Label A werden also Massen von {A}, {A,B}, {A,C} und {A,B,C} etc. zusammengezogen, für den Glaube (Belief) werden nur die Massen aller kleineren Sets zusammengezogen, d.h. für A nur {A}, für {A,B} {A}, {B} und {A,B} etc.).

In der zweiten Ausführungsform wird die ursprüngliche n-dimensionale Ausgabe mit Softmax-Aktivierung durch eine n-dimensionale Ausgabe mit Sigmoid-Aktivierung ersetzt. Im Gegensatz zur Softmax-Funktion ist die Sigmoid-Funktion dabei nicht auf Eins normiert. Jeder Eintrag kann dabei Werte zwischen Null und Eins annehmen. Der Output des Modells wird bei dieser Modifikation als Plausibilität (plausibility) der Singleton-Sets interpretiert.

In Verfahrensschritt 12 wird dann das modifizierten neuronale Netzwerk mit dem Trainingsdatensatz, der bereits für das ursprüngliche Training vor der Modifizierung des künstlichen neuronalen Netzwerks verwendet worden ist, nachtrainiert.

Das Training kann in der ersten Ausführungsform auf zwei verschiedene Arten erfolgen:
i) Die 2^n-dimensionalen Label werden nach dem Prinzip der Nutzenmaximierung (engl.: utility maximization) nutzer- bzw. problemspezifisch konstruiert, wobei dieselbe Lossfunktion wie im ursprünglichen Modell verwendet wird. Beispielsweise kann der häufig in Klassifizierungsaufgaben genutzte Protokollverlust (engl.: cross entropy loss) verwendet werden, welcher ein Maß dafür bereitstellt, wie bestimmte Vorhersagen eines Klassifizierers sind, anstatt nur zu messen, wie korrekt sie sind.
ii) Die 2^n-dimensionalen Label sind one-hot encoded, das heißt sie haben die gesamte Masse auf dem Set mit nur einem Element (Singleton-Set) der jeweiligen Klasse und alle anderen Einträge sind Null. Um Unsicherheiten zu lernen, also auch größere Sets in Fällen hoher Unsicherheit vorherzusagen, wird eine bestimmte Lossfunktion verwendet mit einem Trade-off-Parameter. Diese Lossfunktion ist eine Kombination aus der mittleren quadratischen Abweichung (engl.: mean squared error) auf den Plausibilitäten (Plausibilities) und der mittleren quadratischen Abweichung auf den Werten für den Glauben (Belief), die mit dem Trade-Off-Parameter gewichtet wird.

In der zweiten Ausführungsform erfolgt das Nachtrainieren auf denselben Labeln wie im ursprünglichen Modell, aber mit einer Lossfunktion, die ähnlich wie bei der der ersten Ausführungsform dafür sorgt, dass das Modell Unsicherheiten lernt, also in Fällen hoher Unsicherheit eine hohe Plausibilität (plausibility) auf mehrere Singelton-Sets vorhersagt. Die Lossfunktion ist dabei ein Trade-Off aus der mittleren quadratischen Abweichung und dem Protokollverlust.

In Verfahrensschritt 13 werden Maße für aleatorischer und epistemische Unsicherheit aus den Prädiktionen abgeleitet. Durch Kalibration anhand der vorliegenden Daten kann dann ein anwendungsspezifischer Schwellwert für aleatorische und epistemische Unsicherheit definiert werden, jenseits dem das autonome Fahrsystem reagieren soll, bzw. corner cases gespeichert werden sollen. Dabei werden die Unsicherheitsmaße wie folgt ermittelt:
Bei der ersten Ausführungsform werden für jeden Datenpunkt aus den 2^n Massewerten 2^n Plausibilitätswerte und 2^n Glaubenswerte berechnet. Ein Maß für die epistemische Unsicherheit ergibt sich dann als Differenz aus den Plausibilitätswerten und Glaubenswerten. Die aleatorische Unsicherheit ist zugänglich als (nicht-)Übereinstimmung der Glaubenswerte der Singleton Sets, welches beispielsweise durch die Entropie dieser Werte abgebildet werden kann. Es wird dann für jeden Datenpunkt im Trainingsdatensatz die mittlere Unsicherheit bestimmt und beispielsweise ein Histogram geplottet, aus dem ein Schwellwert auf die Unsicherheit abgelesen werden kann. Zum Beispiel könnte der Schwellwert das 99%-Quantil aller mittleren Unsicherheiten im Trainingsdatensatz sein.

Bei der zweiten Ausführungsform ist das Vorgehen analog, allerdings liegen hier weniger Informationen vor durch die reduzierte Darstellung mit Plausibilitäten (Plausibilities). Beispielsweise kann hier die summierte Plausibilität der Singleton-Sets als Unsicherheitsmaß verwendet werden, welches sowohl aleatorische als auch epistemische Unsicherheit qualitativ umfasst. Eine nähere Unterscheidung beider Unsicherheitstypen ist in diesem Fall allerdings nicht möglich.

Nach der so erfolgten Schwellwertsetzung kann dann erfindungsgemäß online eine Unsicherheitserkennung erfolgen, das heißt im Fall vom autonomen Fahren während der Fahrt, bei der die verfügbaren Latenz-Zeiten sehr gering sind. Dieses ermöglicht, das das autonom fahrende System eine direkte Rückmeldung über die Verlässlichkeit der jeweiligen Vorhersage erhalten kann.

Hierfür werden erfindungsgemäß in der Online-Phase die folgenden Schritte ausgeführt. Zunächst werden in Verfahrensschritt 14 einer oder mehrere neue Datenpunkte erfasst. Hierbei kann es sich insbesondere um mit mindestens einem Fahrzeugsensor erfasste Daten handeln. Dieses können insbesondere Bild- oder Videodaten des Fahrzeugumfelds sein, die von einer oder mehreren Außenkameras des Fahrzeugs erfasst werden. Stattdessen oder zusätzlich kann das Fahrzeugumfeld aber auch mit anderen Sensoren erfasst werden, zum Beispiel mit einem Radarsensor, einem LIDAR-Sensor oder einem Ultraschallsensor. Ebenso kann es sich aber auch um andere im Fahrzeug vorliegende Daten handeln.

Es wird dann in Verfahrensschritt 15 das Unsicherheitsmaß, wie oben für die Offline-Phase beschrieben, bestimmt. Daraufhin wird dann in Verfahrensschritt 16 überprüft, ob das ermittelte Unsicherheitsmaß für den mindestens einen neu erfassten Datenpunkt den in der Offline-Phase ermittelten Unsicherheitsschwellwert überschreitet. Wenn dieses der Fall ist, reagiert das autonome Fahrsystem entsprechend. So kann insbesondere in Verfahrensschritt 17 eine Warnung an das autonome Fahrsystem ausgegeben werden. Ferner kann in Verfahrensschritt 18 je nach Unsicherheits-Typ eine angepasste Aktion des autonomen Fahrsystems erfolgen. Ergibt die Überprüfung in Verfahrensschritte 16 dagegen keine Überschreitung des Unsicherheitsschwellwerts, wird das Verfahren in Verfahrensschritt 14 mit der Erfassung weiterer Datenpunkte fortgesetzt.

Bei der ersten Ausführungsform kann zwischen aleatorischer und epistemischer Unsicherheit getrennt reagiert werden: Bei hoher aleatorischer Unsicherheit verhält sich das System vorsichtig abwartend, da mehr Informationen im Laufe der Zeit die Unsicherheit gegebenenfalls auflösen können. So können beispielsweise weit entfernte Straßenschilder und Verkehrsteilnehmer, beim Näherkommen besser identifiziert werden. Bei hoher epistemischer Unsicherheit reagiert das System konservativer, da hier Fehler auftreten können, welche nicht durch weitere Informationen vermieden werden können. So kann beispielsweise durch das autonome Fahrsystem ein Sicherheitsmanöver eingeleitet werden. Bei der zweiten Ausführungsform kann dagegen nur allgemein konservativ auf die Unsicherheit reagiert werden.

Darüber hinaus kann in Verfahrensschritt 19, insbesondere bei Datenpunkten mit hoher epistemischer Unsicherheit, die entsprechenden Datenpunkte gespeichert werden, um als Corner Cases ein weiteres Training des autonomen Fahrsystems für verbesserte Funktionen zu ermöglichen.

Die Wahl der eingesetzten Ausführungsform kann hierbei in Abhängigkeit von der Anzahl n der Klassen erfolgen. So ist die erste Ausführungsform gegenüber der zweiten Ausführungsform informativer, ist aber nicht so effizient für große n aufgrund der vorliegenden exponentiellen Skalierung. Insbesondere Für Lernprobleme mit wenigen Klassen (n ~< 10) ist die erste Ausführungsform von Vorteil, während für große n der Ansatz gemäß der zweiten Ausführungsform verwendet werden sollte.

Das erfindungsgemäße Verfahren kann beispielsweise als Computerprogramm ausgeführt werden. Die Schritte in der Offline-Phase können hierbei insbesondere durch einen Server, die Schritte in der Online-Phase durch ein Fahrzeug, beispielsweise auf einem Steuergerät des Fahrzeugs, ausgeführt werden.

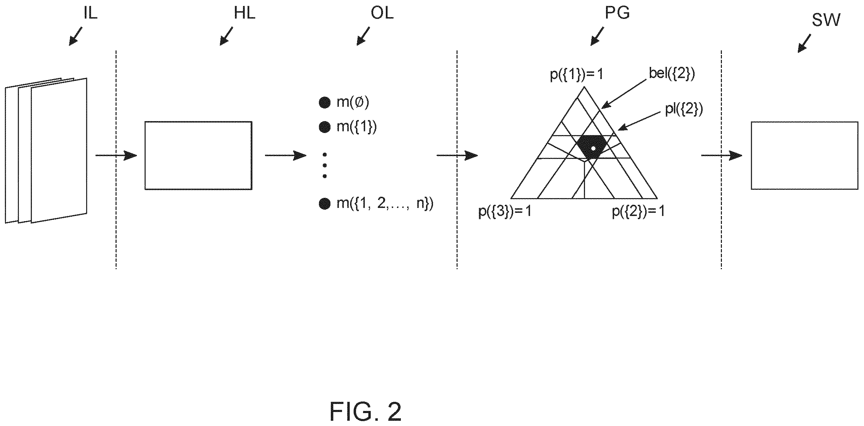

Figur 2 zeigt schematisch ein künstliches neuronales Netzwerk mit einer 2^n-dimensionalen Ausgabe von Werten für Wahrscheinlichkeitsmassen mit Softmax-Aktivierung. Hierbei kann, mit Ausnahme der Ausgabeschicht, ein neuronales Netz mit beliebiger Architektur verwendet werden.

Mit der Eingabeschicht IL (engl.: Input Layer) werden hierbei die ursprünglichen Rohdaten als Eingangsdaten in das neuronale Netz eingespeist. In den darauffolgenden Verborgene Schichten HL (engl.: Hidden Layer) finden dann die eigentlichen Berechnungen des Neuronalen Netzwerks statt. Die letzte Schicht des Neuronalen Netzwerks wird durch die Ausgabeschicht OL (engl.: Output Layer) gebildet, wobei die Ausgabe des Modells erfindungsgemäß als Massenvektor ausgegeben wird. Aus den beim Training ermittelten Massenvektoren werden dann mittels einer geeigneten Verlustfunktion Plausibilitäts- bzw. Glaubensvektoren PG bestimmt, die dann anschließend einer Schwellwertsetzung SW zugeführt werden können. Gemäß der Dempster-Shafer Theorie sind Glaubenswerte strikt kleiner oder gleich groß wie die zu schätzende Wahrscheinlichkeit. Plausibilitätswerte hingegen sind strikt größer oder gleich groß wie die zu schätzende Wahrscheinlichkeit. Daher können die Glaubens- und Plausibilitätswerte zu jedem Set-Output mit genau einer Klasse zusammengefasst als Grenzen eines Wahrscheinlichkeitspolytop angesehen werden, dessen relative Position im Wahrscheinlichkeitssimplex Auskunft über aleatorische Unsicherheit enthält (z.B. ist eine Schätzung im Zentrum des Polytops mit vielen nicht-null Wahrscheinlichkeitsschätzungen aleatorisch unsicherer als eine Schätzung nahe einer Ecke, wo eine Klassenwahrscheinlichkeit dominiert), während die Größe (das Volumen) des von den Glaubens- und Plausibilitätswertgrenzen umschlossenen Bereichs ein Maß für die epistemische Unsicherheit darstellt.

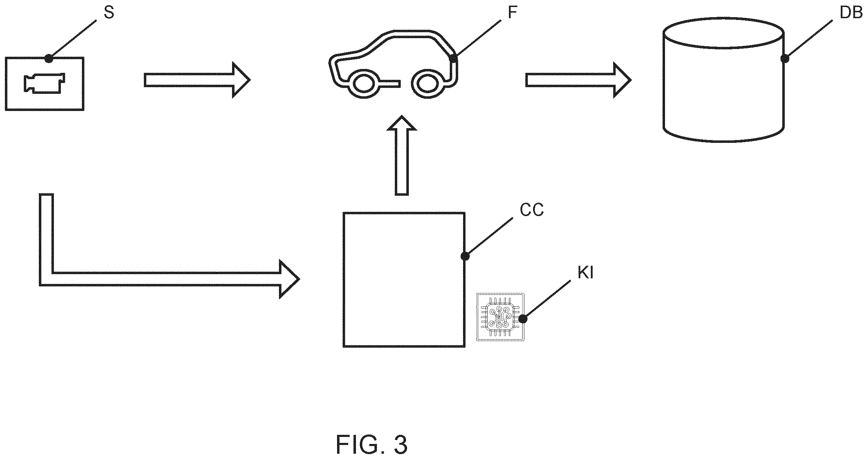

Figur 3 zeigt schematisch eine Übersicht für die Erkennung von Situationen hoher aleatorischer und/oder epistemischer Unsicherheit in der Online-Phase und darauf basierender Reaktionen für autonome Fahrzeuge. Exemplarisch ist ein Fahrzeug F dargestellt, welches Teil einer Fahrzeugflotte sein kann und an einen Flottendatensammler angeschlossen sein kann. Das Fahrzeug F weist hierbei verschiedene Komponenten auf. So sind in dem Fahrzeug insbesondere Sensoren, wie beispielsweise ein oder mehrere Außenkameras zur Erfassung des Fahrzeugumfelds, vorgesehen. Stattdessen oder zusätzlich kann das Fahrzeugumfeld aber auch mit anderen Sensoren erfasst werden, zum Beispiel mit einem Radarsensor, einem LIDAR-Sensor oder einem Ultraschallsensor. In der Figur ist lediglich ein solcher Sensor S dargestellt, der Übersichtlichkeit halber separat von dem Fahrzeug.

Die von dem Sensor S erfassten Sensordaten werden einem Corner-Case-Detektor CC zugeführt. Der Corner Case Detektor ermittelt mit einem KI-Modul Kl, wie oben beschrieben, Datenpunkte mit einem hohe Unsicherheitsmaß. Der Corner Case Detektor kann hierbei insbesondere in dem Fahrzeug F implementiert sein, wobei das KI-Modul dann beispielsweise auf einem zentralen Steuergerät des Fahrzeugs umgesetzt werden kann, welches hierfür ausreichende Rechenkapazitäten aufweist. Das KI-Modul kann hierbei eigens für diesen Zweck in dem Fahrzeug implementiert sein. Alternativ kann ein bereits ohnehin für anderer Zwecke im Fahrzeug vorhandenes KI-Modul verwendet werden.

Es ist aber ebenso möglich, den Corner Case Detektor bei einem nicht dargestellten Backend-Server zu betreiben, der beispielsweise von einem Fahrzeughersteller betrieben werden und Teil einer hier nicht weiter beschriebenen IT-Infrastruktur sein. In diesem Fall weist das Fahrzeug eine Kommunikationseinheit für die drahtlose Kommunikation mit dem Backend-Server auf, beispielsweise über eine Mobilfunkverbindung. Diese Variante hat den Vorteil, dass der Rechenaufwand im Fahrzeug möglichst gering gehalten wird.

Werden von dem KI-Modul KI Datenpunkte erkannt wird, bei denen das Unsicherheitsmaß einen Schwellwert für die aleatorische und/oder epistemische Unsicherheit überschreitet, so erfolgt eine darauf basierende Warnung eines autonomen Fahrsystems des autonom fahrenden Fahrzeugs F. Ferner kann je nach Unsicherheits-Typ eine Funktion des autonomen Fahrsystems angepasst werden.

Insbesondere bei Datenpunkten mit hoher epistemischer Unsicherheit können diese Datenpunkte außerdem gespeichert werden, um als Corner Cases ein weiteres Training für verbesserte Funktionen zu ermöglichen. Hierfür werden diese Datenpunkte einer Datenbank DB zugeführt, in welcher insbesondere mit Labeln versehene Datensätze für die Maschinenlern-Anwendung abgelegt sind. Die Datenbank DB kann hierbei beispielsweise bei dem Backend-Server verortet sein.

### Bezugszeichenliste

- 10 - 13: Verfahrensschritte Offline-Phase
- 14 - 18: Verfahrensschritte Online-Phase
- S: Sensor
- Kl: KI-System
- CC: Corner Case Detektor
- DB: Datenbank
- F: Fahrzeug
- IL: Eingabeschicht des Neuronalen Netzwerks
- HL: Verborgene Schichten des Neuronalen Netzwerks
- OL: Ausgabeschicht des Neuronalen Netzwerks
- PG: Plausibilitäts- bzw. Glaubensvektoren ...
- SW: Schwellwertsetzung

## Patentansprüche

1. Verfahren zur Erkennung von Datenpunkten mit hoher Unsicherheit bei einem Maschinenlernmodell (ML) für ein autonomes Fahrsystem (F), bei dem in einer Offline-Phase die folgenden Schritte ausgeführt werden:
- Bereitstellen (11) eines künstlichen neuronalen Netzwerks, bei dem durch die Ausgabeschicht für die Ausgabedaten jeweils ein Unsicherheitsbereich bestimmt wird;
- Trainieren (12) des künstlichen neuronalen Netzwerks mit einem Trainingsdatensatz;
- Ermitteln (13) von Unsicherheitsmaßen für die Datenpunkte des Trainingsdatensatzes und von Unsicherheitsschwellwerten basierend auf den ermittelten Unsicherheitsmaßen;
und in einer Online-Phase die folgenden Schritte ausgeführt werden:
- Erfassen (14) eines neuen Datenpunkts;
- Ermitteln (15) des Unsicherheitsmaßes für den neu erfassten Datenpunkt;
- Überprüfen (16), ob das ermittelte Unsicherheitsmaß für den neu erfassten Datenpunkt den in der Offline-Phase ermittelten Unsicherheitsschwellwert überschreitet.

2. Verfahren nach Anspruch 1, wobei in der Offline-Phase
- das künstliche neuronale Netzwerk mit einem Trainingsdatensatz auf eine Aufgabe vortrainiert (10) wird;
- das vortrainierte künstliche neuronalen Netzwerk modifiziert (11) wird, indem die Ausgabeschicht des künstlichen neuronalen Netzwerks durch eine Ausgabeschicht ersetzt wird, bei der für die Ausgabedaten jeweils ein Unsicherheitsbereich bestimmt wird; und
- das modifizierte künstliche neuronale Netzwerk mit dem Trainingsdatensatz, der bereits für das ursprüngliche Training vor der Modifizierung des künstlichen neuronalen Netzwerks verwendet worden ist, nachtrainiert (12) wird.

3. Verfahren nach Anspruch 1 oder 2, wobei sowohl ein Unsicherheitsmaß für die aleatorische Unsicherheit als auch ein Unsicherheitsmaß für die epistemische Unsicherheit der Datenpunkte ermittelt wird.

4. Verfahren nach Anspruch 3, wobei sowohl ein Unsicherheitsschwellwert für die aleatorische Unsicherheit als auch ein Unsicherheitsschwellwert für die epistemische Unsicherheit der Datenpunkte ermittelt (13) wird.

5. Verfahren nach einem der vorhergehenden Ansprüche, wobei für den Fall, dass die Überprüfung ergibt, dass das ermittelte Unsicherheitsmaß den Unsicherheitsschwellwert überschreitet, eine Warnung an das autonome Fahrsystem (F) ausgegeben (17) wird.

6. Verfahren nach einem der vorhergehenden Ansprüche, wobei für den Fall, dass die Überprüfung ergibt, dass das bestimmte Unsicherheitsmaß den Unsicherheitsschwellwert überschreitet, eine Funktion des autonomen Fahrsystems (F) angepasst (18) wird.

7. Verfahren nach einem der vorhergehenden Ansprüche, wobei für den Fall, dass die Überprüfung ergibt, dass das bestimmte Unsicherheitsmaß den Unsicherheitsschwellwert überschreitet, der neu erfasste Datenpunkt für ein weiteres Training des autonomen Fahrsystems (F) gespeichert (18) wird.

8. Verfahren nach einem der vorhergehenden Ansprüche, wobei das Maschinenlernmodell (ML) eine Klassifikation für eine semantische Segmentierung und/oder Objekterkennung vornimmt, welche für ein Assistenzsystem des autonomen Fahrsystems (F) verwendet wird.

9. Verfahren nach Anspruch 8, wobei das Maschinenlernmodell (ML) eine Klassifikation in n verschiedene Klassen vornimmt und bei dem ursprünglichen Trainieren des künstlichen neuronalen Netzwerks in der Ausgabeschicht eine Softmax-Aktivierungsfunktion angewendet wird, mit der eine n-dimensionale Ausgabe von normierten Wahrscheinlichkeitswerten für die Datenpunkte generiert wird.

10. Verfahren nach Anspruch 9, wobei die n-dimensionale Ausgabe von Wahrscheinlichkeitswerten mit Softmax-Aktivierung durch eine 2^n-dimensionale Ausgabe von Werten für Wahrscheinlichkeitsmassen für alle Kombinationen möglicher Klassen mit Softmax-Aktivierung ersetzt wird und das so modifizierte künstliche neuronale Netzwerk nachtrainiert wird.

11. Verfahren nach Anspruch 10, wobei die Unsicherheitsmaße ermittelt werden, indem für jeden Datenpunkt aus den 2^n Werten für die Wahrscheinlichkeitsmassen 2^n Plausibilitätswerte und 2^n Glaubenswerte berechnet werden.

12. Verfahren nach Anspruch 11, wobei ein Maß für die epistemische Unsicherheit aus der Differenz der Plausibilitätswerte und Glaubenswerte berechnet wird.

13. Verfahren nach Anspruch 11 oder 12, wobei ein Maß für die aleatorische Unsicherheit mittels der Entropie der Plausibilitätswerte berechnet wird.

14. Verfahren nach Anspruch 9, wobei der die n-dimensionale Ausgabe von Wahrscheinlichkeitswerten mit Softmax-Aktivierung durch eine n-dimensionale Ausgabe von Wahrscheinlichkeitswerten mit Sigmoid -Aktivierung ersetzt wird und das so modifizierte künstliche neuronale Netzwerk nachtrainiert wird.

15. Verfahren nach Anspruch 14, wobei die Unsicherheitsmaße sowohl die aleatorische als auch epistemische Unsicherheit umfassen und mittels einer Summation der Plausibilitätswerte ermittelt werden.

16. Vorrichtung, die eingerichtet ist, ein Verfahren gemäß einem der Ansprüche 1 bis 15 auszuführen.
